# EUROPEAN PATENT SPECIFICATION

(11) **EP 3 566 854 B1**
(45) Date of publication and mention of the grant of the patent: **15.09.2021**
(21) Application number: 18171086.4
(22) Date of filing: 07.05.2018
(51) Int. Cl.: B29C 64/153, B29C 64/165, B29C 64/20

(54) **APPARATUS FOR ADDITIVELY MANUFACTURING THREE-DIMENSIONAL OBJECTS**
VORRICHTUNG ZUR GENERATIVEN FERTIGUNG DREIDIMENSIONALER OBJEKTE
APPAREIL DE FABRICATION ADDITIVE D'OBJETS TRIDIMENSIONNELS

(43) Date of publication of application: 13.11.2019
(73) Proprietor: CL Schutzrechtsverwaltungs GmbH, 96215 Lichtenfels (DE)
(72) Inventor: Winiarski, Daniel, 96231 Bad Staffelstein (DE)
(74) Representative: Hafner & Kohl PartmbB

(56) References cited:
- EP-A1- 3 017 934
- EP-A1- 3 254 829
- US-A1- 2017 190 112

## Description

The invention relates to an apparatus for additively manufacturing three-dimensional objects by means of successive layerwise selective irradiation and consolidation of layers of a build material which can be consolidated by means of an energy source, wherein the apparatus comprises an application unit adapted to apply build material on at least one carrying element adapted to carry build material applied onto the carrying element.

Apparatuses for additively manufacturing three-dimensional objects by successive layerwise selective irradiation and consolidation of layers of a build material, for example selective laser melting apparatuses or selective laser sintering apparatuses, are generally known from prior art. Typically, build material is layerwise applied and selectively irradiated to form the corresponding layer of an object to be additively built. The layer of build material is applied on the at least one carrying element that is adapted to carry the build material. By successively applying multiple layers of build material that are selectively irradiated, the three-dimensional object can be built.

Further, it is known from prior art that the application step requires time in which build material cannot be irradiated. For example, build material may be applied via an application unit, for example a coater blade, wherein build material arranged in a build plane cannot be irradiated while the application unit applies build material onto the build plane. Thus, it is necessary to apply build material and irradiate the applied build material alternatingly. Respective carrying elements and/or build planes are usually circular or rectangular which leads to a high consumption of build material, in particular if hollow objects or curved objects are to be built that only use a minor area of the build plane. For example, a rotational symmetric hollow three-dimensional object, such as a turbine housing that is built in a rectangular build plane, uses only a minor part of the area of the build plane in which build material is directly irradiated and consolidated. The rest of the build plane or the build chamber volume is filled with non-consolidated build material that is wasted or has to be post-processed and recycled, respectively.

The document US 2017 190 112 A1 discloses an apparatus for additively manufacturing three-dimensional objects on a platform, wherein walls can be built surrounding a volume of build material.

It is an object of the present invention to provide an improved apparatus for additively manufacturing of three-dimensional objects, in particular an apparatus in which the application of build material can be performed more efficiently.

The object is inventively achieved by an apparatus according to claim 1. Advantageous embodiments of the invention are subject to the dependent claims.

The apparatus described herein is an apparatus for additively manufacturing three-dimensional objects, e.g. technical components, by means of successive selective layerwise consolidation of layers of a powdered build material ("build material") which can be consolidated by means of an energy source, e.g. an energy beam, in particular a laser beam or an electron beam. A respective build material can be a metal, ceramic or polymer powder. A respective energy beam can be a laser beam or an electron beam. A respective apparatus can be a selective laser sintering apparatus, a selective laser melting apparatus or a selective electron beam melting apparatus, for instance. Alternatively, the successive layerwise selective consolidation of build material may be performed via at least one binder material. The binder material may be applied with a corresponding application unit and, for example, irradiated with a suitable energy source, e.g. a UV light source.

The apparatus may comprise a number of functional units which are used during its operation. Exemplary functional units are a process chamber, an irradiation device which is adapted to selectively irradiate a build material layer disposed in the process chamber with at least one energy beam, and a stream generating device which is adapted to generate a gaseous fluid stream at least partly streaming through the process chamber with given streaming properties, e.g. a given streaming profile, streaming velocity, etc. The gaseous fluid stream is capable of being charged with non-consolidated particulate build material, particularly smoke or smoke residues generated during operation of the apparatus, while streaming through the process chamber. The gaseous fluid stream is typically inert, i.e. typically a stream of an inert gas, e.g. argon, nitrogen, carbon dioxide, etc.

As described before, the inventive apparatus further comprises an application unit which is adapted to apply build material on at least one carrying element. The carrying element in the scope of this application may provide an arbitrary surface on which build material can be applied. Thus, at least one layer of build material can be applied onto the carrying element, i.e. a build plane can be provided on the carrying element, in which a layer of build material is arranged that can be directly irradiated via the at least one energy beam.

The invention is based on the idea that a wall building unit is provided that is adapted to build at least one wall element delimiting a build material volume carried by the carrying element, wherein a first wall building element and a second wall building element are provided, wherein the first wall building element and the second wall building element are at least partially arranged next to a build material volume carried by the carrying element, in portal-shape.

According to the inventive apparatus, a wall building unit is provided that is adapted to build at least one wall element delimiting a build material volume carried by the carrying element. The carrying element may be built as annular disc, for example as annular plate, carrying a build material volume. To hold the build material carried by the carrying element in place, the at least one wall element may be built via the wall building unit. For example, the wall building unit may build two (circular) walls delimiting a build material volume on the carrying element or two wall building units may be provided, wherein each wall building unit builds one wall on the carrying element. Thus, the build material volume that is applied on and carried by the carrying element is held in place by the wall element(s) in that the additive manufacturing process can be performed accurately.

Additionally it is also possible to have the irradiation device at least partially consolidate at least one part of at least one wall element. Thus, additionally to the generation of the at least one wall element via the wall building unit, the at least one wall element may be built via the irradiation device or the build process of the at least one wall element may be supported via the irradiation device. For example, the at least one wall building unit may only be used to temporarily stabilize build material in the corresponding section of the build plane in which the irradiation device is used to irradiate and consolidate the at least one wall element. It is also possible to combine the individual building approaches for building the at least one wall element. For example, a first irradiation element may be provided for irradiating build material to build the three-dimensional object, wherein the first irradiation element may also be used to irradiate build material to build the at least one wall element. Further, it is possible to provide at least one second irradiation element, e.g. adapted to generate an energy beam with a comparatively lower power or intensity, respectively, for building the wall element(s), while the first irradiation element is used to build the object.

The first wall building element and the second wall building element are advantageously at least partially arranged next to the build material volume that is carried by the carrying element in portal-shape. Thus, the first wall building element and the second wall building element may be arranged essentially perpendicular to the carrying element and may be arranged next to the carrying element, wherein the first wall building element and the second wall building element may be arranged on different radii. The first wall building element and the second wall building element may be understood as columns of a portal that is arranged around the carrying element (the carrying device extending through the opening of the portal), wherein the carrying element moves through the opening of the portal due to the rotational movement between the application unit and the carrying element.

Preferably, the application unit is adapted to apply at least one arc-shaped build material layer. Thus, the application unit may apply build material onto the at least one carrying element (or onto at least one previously applied layer of build material carried by the carrying element), wherein the shape of the layer of build material or the cross-section of the layer of build material is not restricted to rectangular or circular build material layers, as known from prior art. Instead, the application unit may apply arc-shaped, for example annular, layers of build material that can afterwards be selectively irradiated and consolidated. By providing the ability to apply arc-shaped layers, the build plane may be adjusted to the shape of the three-dimensional object that has to be manufactured in the additive manufacturing process. For example, hollow parts or curved parts can be manufactured more efficiently, as the three-dimensional object does not have to be manufactured in a circular or rectangular build plane from which only a minor part is used. For example, by applying an arc-shaped, in particular a disc-shaped, layer of build material, rotational symmetric parts can be manufactured with a reduced amount of non-consolidated build material that is wasted or has to be recycled, respectively. Besides rotational symmetric parts it is also possible to have parts manufactured more efficiently that comprise a certain symmetry, such as parts with polygonal cross-section, e.g. pentagonal, hexagonal or octagonal cross-sections, for instance. It is also possible to have curved parts manufactured more efficiently that can be manufactured inside the arc-shape.

According to an embodiment of the present invention, the carrying element may be at least partially disc-shaped and may extend between a first radius and a second radius. Thus, the carrying element may be built at least partially disc-shaped, for example as annular disc, wherein the carrying element can extend between the first radius and the second radius. The first radius may extend from a center to an inner edge or an inner wall of the carrying element, wherein the second radius may extend from a center of the carrying element to an outer edge or an outer wall of the carrying element. The carrying element may therefore, be built as annular disc, wherein the first radius describes a (centered) recess or an opening in the center of the disc. In other words, the carrying element may be disc-shaped, wherein the second radius is the radius of the disc pointing to the outer rim of the disc and the first radius is the radius of the recess or the hole in the disc. Thus, the carrying element may be shaped like a washer or a shim, respectively. As the application unit is adapted to apply build material onto the carrying element, the build material applied onto the carrying element is applied as an arc-shaped layer of build material, in particular an (annular) disc-shaped layer.

Further, a drive device may be provided that is adapted to generate a relative movement between the application unit and the carrying element. Hence, the application unit and the carrying element may be moved relative to one another, wherein the application unit may be moved and/or the carrying element may be moved. Thus, build material can be applied, wherein due to the relative movement of the carrying element and the application unit, the layer of build material can be formed on the carrying element.

The drive device may in particular be adapted to generate a rotational movement between the application unit and the carrying element and/or a translatory movement, in particular in z-direction, between the application unit and the carrying element. Thus, the application unit and the carrying element may be moved translatory relative to one another, in particular in z-direction, wherein due to the translatory movement the distance between the application unit and the carrying element may be adjusted. For example, after a layer of build material has been applied on the carrying element, the application unit and the carrying element may be moved relative to one another, for example in z-direction, to allow for another layer of build material to be applied. By having the drive device provide a rotational movement between the carrying element and the application unit, it is possible to apply an arc-shaped build material layer, such as a disc-shaped build material layer on the carrying element.

For example, the carrying element may be static, wherein the application unit can be moved in a rotational movement relative to the carrying element and apply build material onto the carrying element. Additionally or alternatively, it is also possible to move the carrying element in a rotational movement relative to the application unit.

Preferably, the drive device may be adapted to generate the translatory movement and/or the rotational movement of the application unit and/or the carrying element continuously or stepwise. Thus, both the translatory movement and the rotational movement may be performed continuously or stepwise. For example, the rotational movement may be continuous while the translatory movement may be performed dependent on the application of build material layers. In particular, a first layer of build material may be applied onto the carrying element, wherein after the first layer of build material is complete, the application unit and the carrying element may be moved translatory to one another, for example in z-direction. It is also possible to have both, the translatory movement and the rotational movement performed continuously, wherein build material is continuously applied onto the carrying element while the carrying element and the application unit move in a rotational movement relative to one another and while the application unit and the carrying element are moved translatory to one another for example in z-direction.

The application unit and/or the carrying element may be moved along a drive element, such as a spindle drive, wherein the translatory movement and the rotational movement are coupled in that for a defined degree of rotation the application unit and/or the carrying element are translatory moved for a defined distance (in z-direction). In particular, the translatory movement may directly correlate to the rotational movement, for example in that by rotating the carrying element and/or the application unit 360° or a full turn, around a center axis, the application unit and/or the carrying element is moved for the distance of one layer thickness relative to one another, in particular away from one another. Preferably, the carrying element is continuously rotated relative to the application unit or vice versa, while the distance between the application unit and the carrying element is continuously increased. Thus, a continuous application of build material is possible, wherein build material can also continuously be irradiated in that downtimes of the irradiation process can be avoided.

As described before, the wall building unit comprises at least one wall building element that is adapted to build a wall element, wherein a first wall building element is adapted to build a first wall element on the first radius of the carrying element and a second wall building element is adapted to build a second wall element on the second radius of the carrying element. Thus, the wall building unit comprises two wall building elements, wherein each wall building element is adapted to build one wall element. In particular, the first wall building element builds the first wall element on the first radius of the carrying element and the second wall building element builds the second wall element on the second radius of the carrying element. Thus, an arc-shaped build material volume is generated that is delimited between the two (arc-shaped / circular) wall elements that are built onto the carrying element, in particular on the first radius and on the second radius. As the carrying element may be built like a washer or a shim, respectively, i.e. (annular) disc-shaped, the build material volume delimited by the two wall elements can be regarded as a cylinder segment / tube segment, wherein the first radius defines the inner diameter of the (hole in the) cylinder and the second radius defines the outer diameter or the shell surface of the cylinder.

The wall building unit may further be adapted to successively layerwise build the at least one wall element from build material applied on the carrying element. Hence, the application unit applies build material onto the carrying element, wherein the at least one wall building unit may build the at least one wall element delimiting the build material volume from the build material that has been applied via the application unit. Thus, the wall elements are successively built from the same build material that is used to build the three-dimensional object in the additive manufacturing process. The wall elements therefore, "grow" together with the object as the object is additively built.

According to another embodiment of the present invention, the wall building unit may be adapted to build the at least one wall element via energy deposition, in particular via an energy beam and/or a heating element, and/or via deposition of at least one binder material. According to a first approach, the at least one wall element may be built via an energy deposition, wherein energy may directly be deposited in the build material to build the at least one wall element. For example, an energy beam, such as a laser beam may be used by the wall building unit to irradiate and thereby consolidate build material to form the at least one wall element. Besides, a heating element, e.g. a peltier element, can be used that transfers thermal energy into the build material to thereby consolidate the build material, for example via sintering the build material. It is particularly possible to use the same energy beam for depleting the energy to build the wall element that is used in the additive manufacturing process for irradiating the build material. Alternatively, it is possible to use energy sources that are provided explicitly for building the at least one wall element.

According to another approach, at least one binder material may be depleted into the build material to build the at least one wall element. Thus, it is possible to add the binder material to the areas of build material that shall form the at least one wall element. Preferably, the binder material is solvable, wherein, for example, after the additive manufacturing process is finished and the object is additively being built inside the build material volume, the wall elements can be removed by solving the binder material. Thus, non-consolidated build material can be removed from the three-dimensional object.

Further, the apparatus comprises at least one irradiation device that is adapted to irradiate build material arranged on the carrying element, in particular between the first wall element and the second wall element. The irradiation device may be used to (selectively) irradiate the build material to consolidate the build material and thereby generate or manufacture, respectively, the three-dimensional object inside the build material volume that is carried by the carrying element. Thus, the irradiation device is in particular adapted to irradiate the build material that is arranged between the first wall element and the second wall element.

The wall building elements are movable together with the application unit relative to the carrying element. The relative movement of the application unit and the carrying element may also induce a rotational movement between the wall building elements and the carrying element. Thus, build material that is applied by the application unit may be consolidated via the wall building elements (or temporarily be held in place until the irradiation device consolidates the build material to form the wall elements).

The portal shape that has been described before is enhanced by having the application unit and the wall building unit and the irradiation device form an assembly. Thus, the irradiation device and the application unit and the stream generating unit may be arranged in that the wall building elements are connected via the corresponding functional units of the apparatus, e.g. the irradiation device and/or the application unit. Thus, the portal shape is formed via the two wall building elements and the respective functional units arranged horizontally connecting both wall building elements. In particular, the described functional units may be understood as a yoke connecting the two wall building elements that form the columns of the portal.

Further, the application unit may comprise at least one application element, in particular a coater blade, and at least one dose unit adapted to provide build material onto the carrying element or at least one previously applied layer of build material, wherein the application unit is adapted to distribute the provided build material via the application element. Thus, fresh build material may be provided via the dose unit that can be adapted to provide the build material onto the carrying element. Afterwards, the provided build material can be distributed on the carrying element to form a build plane, i.e. a layer of build material that can be selectively irradiated via the irradiation device. Preferably, the application unit is arranged in that the material that is provided by the dose unit is distributed via the application element due to the relative movement, in particular the rotational movement of the application unit relative to the carrying element or vice versa.

Besides, the invention relates to a not claimed application unit for an apparatus for additively manufacturing of three-dimensional objects by means of successive layerwise selective irradiation and consolidation of layers of a build material which can be consolidated by means of an energy source, in particular for an apparatus, as described before, wherein the application unit is adapted to apply at least one arc-shaped build material layer.

Additionally, the invention relates to a method for operating at least one apparatus for additively manufacturing three-dimensional objects by means of successive layerwise selective irradiation and consolidation of layers of a build material which can be consolidated by means of an energy source, in accordance with claim 13.

Self-evidently, all details, features and advantages described with respect to the apparatus are fully transferable to the method.

Exemplary embodiments of the invention are described with reference to the Fig. The Fig. are schematic diagrams, wherein
- Fig. 1: shows an inventive apparatus in top view;
- Fig. 2: shows a cross-section II-II of the inventive apparatus from Fig. 1; and
- Fig. 3: shows a cross-section III-III of the inventive apparatus from Fig. 1.

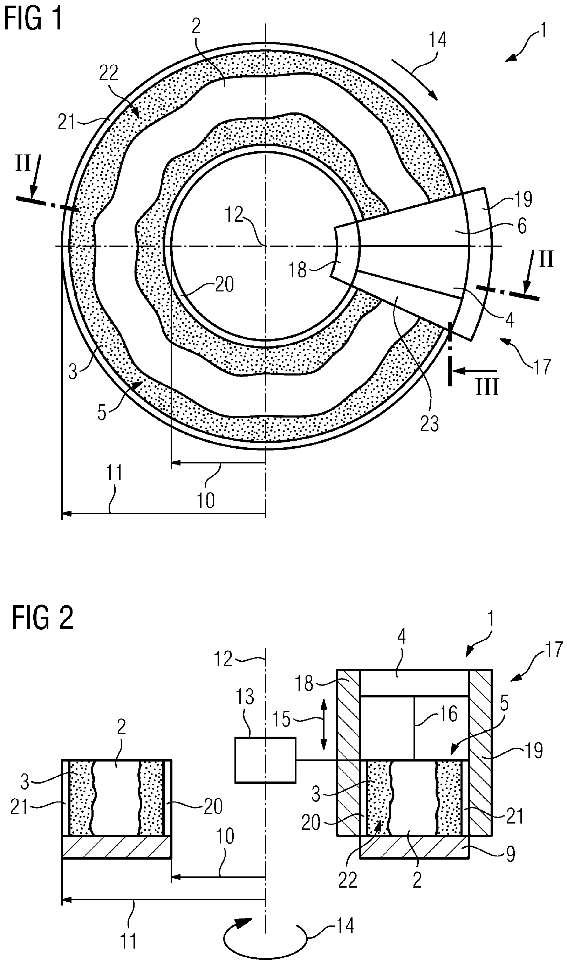

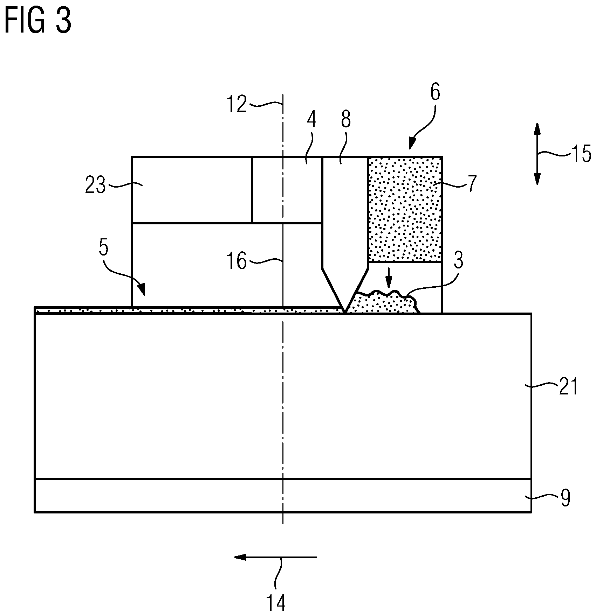

Fig. 1 shows an apparatus 1 for additively manufacturing of three-dimensional objects 2 by means of successive layerwise selective irradiation and consolidation of layers of a build material 3 which can be consolidated by means of an energy source. The apparatus 1 further comprises an irradiation device 4 that is adapted to selectively irradiate build material 3 that is arranged in a build plane 5. The build material 3 is applied via an application unit 6 that comprises a dose unit 7 and an application element 8, as will be described later respect to Fig. 3.

In other words, the application unit 6 is adapted to apply build material 3 on a carrying element 9 (or a previously applied layer of build material 3 carried by the carrying element 9), wherein the application unit 6 is in particular adapted to apply an arc-shaped build material layer. In the exemplary embodiment depicted in Fig. 1 - 3 the carrying element 9 is disc-shaped and extends between a first radius 10 and a second radius 11 (depicted via arrows in Fig. 1, 2). Thus, the carrying element 9 extends (rotational symmetric) around a center axis 12, wherein the carrying element 9 can be compared with a washer or a shim, respectively. Thus, the first radius 10 defines an inner edge of the carrying element 9 and a recess centered in the center axis 12 of the carrying element 9 and the second radius 11 defines an outer edge of the carrying element 9.

The apparatus 1 further comprises a drive device 13 that is adapted to generate a relative movement between the application unit 6 and the carrying element 9. In particular, the drive device 13 is adapted to generate a rotational movement (as indicated via arrow 14) and a transitional movement (as indicated via arrow 15). Thus, the application unit 6 and the carrying element 9 can be rotated relative to one another, wherein both, the application unit 6 and the carrying element 9 can be moved or one of the application unit 6 or the carrying element 9 can be static, wherein the other functional unit can be moved. In this exemplary embodiment the application unit 6 is moved relative to a static carrying element 9.

The movement of the application unit 6 relative to the carrying element 9 can be performed continuously or stepwise, wherein in this exemplary embodiment the translatory movement and the rotational movement are both performed continuously, wherein the application unit 6 is continuously moved relative to the application unit 6 in that for every turn the application unit 6 is turned around the center axis 12 the application unit 6 is continuously raised, e.g. by one layer thickness of build material 3 that is applied onto the carrying element 9 (or a previously applied layer of build material 3).

As can be derived from Fig. 2, the irradiation device 4 is adapted to generate an energy beam 16, for example a laser beam, to selectively irradiate build material 3 arranged in the build plane 5. Further, as depicted in Fig. 1, 2 the apparatus 1 comprises a wall building unit 17 that comprises a first wall building element 18 and a second wall building element 19. The wall building unit 17 is adapted to build at least one wall element 20, 21, wherein the 2 wall elements 20, 21 to limit a build material volume 22 that is carried by the carrying element 9.

In particular, the wall building unit 17 comprises first wall building element 18 that is essentially arranged and adapted to build a first wall element 20 arranged on the first radius 10 and wherein the wall build unit 17 comprises the second wall building element 19 that is arranged on the second radius 11 and adapted to build the second wall element 21. In the depicted embodiment the wall building elements 18, 19 are adapted to deplete energy in the build material 3 that is arranged on the build material volume 22 to consolidate the build material 3 and thereby build the wall elements 20, 21. For example, the wall building elements 18, 19 are built as heating elements, e.g. peltier elements, that can be controlled via a control unit (not shown) to provide heat energy and deplete the heat energy in the build material 3, as described before. Thus, the wall elements 20, 21 can be successively and layerwise built together with the object 2, as fresh build material 3 is applied via the application unit 6.

The irradiation device 4, the wall building unit 17, comprising the wall building elements 18, 19 and the application unit 6 form a combined assembly that is movable relative to the carrying element 9, as described before. Further, a stream generating unit 23 may be provided that is adapted to generate a stream (of process gas) in the area of the build plane 5.

Fig. 3 shows a cross-section III - III as indicated in Fig. 1. As described before, the application unit 6 comprises a dose unit 7 and an application element 8, wherein the dose unit 7 provides fresh build material 3 that is distributed via the application element 8, for example a rake or a coater blade, to form fresh layers of build material 3 in the build plane 5. The layers of build material 3 can selectively be irradiated via the energy beam 16 generated via the irradiation device 4. Thus, as the combined assembly is rotated around the center axis 12 (as indicated via arrow 14) and continuously raised (as indicated via arrow 15) build material is layerwise continuously applied onto the carrying element 9 and is continuously selectively irradiated to generate the object 2. Further, the irradiation device 4 may also be used to support the wall building unit 17 in building the wall elements 20, 21.

Self-evidently, the inventive method is performed on the inventive apparatus. All details, features and advantages described with respect to the apparatus 1 depicted in the individual Fig. 1 - 3 are fully transferable and exchangeable.

## Claims

1. Apparatus for additively manufacturing three-dimensional objects (2) by means of successive layerwise selective irradiation and consolidation of layers of a build material (3) which can be consolidated by means of an energy source, wherein the apparatus (1) comprises an application unit (6) adapted to apply build material (3) on at least one carrying element (9) adapted to carry build material (3) applied onto the carrying element (9), wherein the apparatus comprises an irradiation device (4) adapted for irradiating build material (3) arranged on the carrying element (9), **characterized in that** a wall building unit (17) is provided that is adapted to build at least one wall element (20, 21) delimiting a build material volume (22) carried by the carrying element (9a), wherein a first wall building element (18) and a second wall building element (19) are provided, wherein the first wall building element (18) and the second wall building element (19) are at least partially arranged next to a build material volume (22) carried by the carrying element (9), wherein the application unit (6) and the wall building unit (17) and the irradiation device (4) form a portal-shaped assembly that is moveable relative to the carrying element (9).

2. Apparatus according to claims 1, **characterized in that** the application unit (6) is adapted to apply at least one arc-shaped build material layer.

3. Apparatus according to claim 1 or 2, **characterized in that** the carrying element (9) is at least partially disc-shaped and extends between a first radius (10) and a second radius (11).

4. Apparatus according to one of the preceding claims, **characterized by** a drive device (13) adapted to generate a relative movement between the application unit (6) and the carrying element (9).

5. Apparatus according to one of the preceding claims, **characterized in that** the drive device (13) is adapted generate a rotational movement between the application unit (6) and the carrying element (9) and/or a translatory movement, in particular in z-direction, between the application unit (6) and the carrying element (9).

6. Apparatus according to one of the preceding claims, **characterized in that** the drive device (13) is adapted to generate the translatory movement and/or the rotational movement of the application unit (6) and/or the carrying element (9) continuously or stepwise.

7. Apparatus according to one of the preceding claims, **characterized in that** the first wall building element (18) is adapted to build a first wall element (20) on the first radius (10) of the carrying element (9) and the second wall building element (19) is adapted to build a second wall element (21) on the second radius (11) of the carrying element (9).

8. Apparatus according to one of the preceding claims, **characterized in that** the wall building unit (17) is adapted to successively layerwise build the at least one wall element (20, 21) from build material (3) applied on the carrying element (9).

9. Apparatus according to one of the preceding claims, **characterized in that** the wall building unit (17) is adapted to build the at least one wall element (20, 21) via energy deposition, in particular via an energy beam and/or a heating element, and/or deposition of at least one binder material.

10. Apparatus according to one of the preceding claims, **characterized in that** the irradiation device (4) is adapted to irradiate build material (3) between the first wall element (20) and the second wall element (21).

11. Apparatus according to one of the preceding claims, **characterized in that** the application unit (6) and the wall building unit (17) and the irradiation device (4) and a stream generating unit (23) form an assembly.

12. Apparatus according to one of the preceding claims, **characterized in that** the application unit (6) comprises at least one application element (8), in particular a coater blade, and at least one dose unit (7) adapted to provide build material (3) onto the carrying element (9) or at least one previously applied layer of build material (3), wherein the application unit (6) is adapted to distribute the provided build material (3) via the application element (8).

13. Method for operating at least one apparatus (1) according to one of the claims 1 to 12 for additively manufacturing three-dimensional objects (2) by means of successive layerwise selective irradiation and consolidation of layers of a build material (3) which can be consolidated by means of an energy source, wherein at least one wall element (20, 21) is built via the first and second wall building element (18, 19), which wall element (20, 21) delimits a build material volume (22) carried by the carrying element (9a).

## Patentansprüche

1. Vorrichtung zur additiven Herstellung von dreidimensionalen Gegenständen (2) durch aufeinanderfolgende schichtweise selektive Bestrahlung und Verfestigung von Schichten eines mittels einer Energiequelle verfestigbaren Aufbaumaterials (3), wobei die Vorrichtung (1) eine Auftragseinheit (6) umfasst, die geeignet ist, Aufbaumaterial (3) auf mindestens ein Trägerelement (9) aufzutragen, das geeignet ist, auf das Trägerelement (9) aufgebrachtes Aufbaumaterial (3) zu tragen, wobei die Vorrichtung eine Bestrahlungsvorrichtung (4) umfasst, die zum Bestrahlen von auf dem Trägerelement (9) angeordnetem Baumaterial (3) angepasst ist, **dadurch gekennzeichnet, dass** eine Wandaufbaueinheit (17) eine Wandaufbaueinheit (17) vorgesehen ist, die geeignet ist, mindestens ein Wandelement (20, 21) aufzubauen, das ein von dem Trägerelement (9a) getragenes Aufbaumaterialvolumen (22) begrenzt, wobei ein erstes Wandbauelement (18) und ein zweites Wandbauelement (19) vorgesehen sind, wobei das erste Wandbauelement (18) und das zweite Wandbauelement (19) zumindest teilweise neben einem von dem Trägerelement (9) getragenen Baustoffvolumen (22) angeordnet sind, wobei die Applikationseinheit (6) und die Wandbaueinheit (17) und die Bestrahlungseinrichtung (4) eine portalförmige Baugruppe bilden, die relativ zu dem Trägerelement (9) bewegbar ist.

2. Vorrichtung nach Anspruch 1, **dadurch gekennzeichnet, dass** die Applikationseinheit (6) zum Aufbringen mindestens einer bogenförmigen Baustoffschicht eingerichtet ist.

3. Vorrichtung nach Anspruch 1 oder 2, **dadurch gekennzeichnet, dass** das Trägerelement (9) zumindest teilweise scheibenförmig ist und sich zwischen einem ersten Radius (10) und einem zweiten Radius (11) erstreckt.

4. Vorrichtung nach einem der vorhergehenden Ansprüche, **gekennzeichnet durch** eine Antriebseinrichtung (13), die geeignet ist, eine Relativbewegung zwischen der Applikationseinheit (6) und dem Tragelement (9) zu erzeugen.

5. Vorrichtung nach einem der vorhergehenden Ansprüche, **dadurch gekennzeichnet, dass** die Antriebseinrichtung (13) ausgebildet ist, eine Rotationsbewegung zwischen der Applikationseinheit (6) und dem Tragelement (9) und/oder eine translatorische Bewegung, insbesondere in z-Richtung, zwischen der Applikationseinheit (6) und dem Tragelement (9) zu erzeugen.

6. Vorrichtung nach einem der vorhergehenden Ansprüche, **dadurch gekennzeichnet, dass** die Antriebseinrichtung (13) dazu eingerichtet ist, die translatorische Bewegung und/oder die rotatorische Bewegung der Applikationseinheit (6) und/oder des Trägerelements (9) kontinuierlich oder schrittweise zu erzeugen.

7. Vorrichtung nach einem der vorhergehenden Ansprüche, **dadurch gekennzeichnet, dass** das erste Wandbildungselement (18) dazu ausgebildet ist, ein erstes Wandelement (20) auf dem ersten Radius (10) des Tragelementes (9) und das zweite Wandbauelement (19) zum Aufbau eines zweiten Wandelementes (21) auf dem zweiten Radius (11) des Tragelementes (9) ausgebildet ist.

8. Vorrichtung nach einem der vorhergehenden Ansprüche, **dadurch gekennzeichnet, dass** die Wandaufbaueinheit (17) dazu eingerichtet ist, das mindestens eine Wandelement (20, 21) aus auf dem Trägerelement (9) aufgebrachtem Aufbaumaterial (3) sukzessive schichtweise aufzubauen.

9. Vorrichtung nach einem der vorhergehenden Ansprüche, **dadurch gekennzeichnet, dass** die Wandbaueinheit (17) dazu eingerichtet ist, das mindestens eine Wandelement (20, 21) durch Energieabscheidung, insbesondere durch einen Energiestrahl und/oder ein Heizelement, und/oder Abscheidung mindestens eines Bindemittels aufzubauen.

10. Vorrichtung nach einem der vorangehenden Ansprüche, **dadurch gekennzeichnet, dass** die Bestrahlungsvorrichtung (4) geeignet ist, Aufbaumaterial (3) zwischen dem ersten Wandelement (20) und dem zweiten Wandelement (21) zu bestrahlen.

11. Vorrichtung nach einem der vorhergehenden Ansprüche, **dadurch gekennzeichnet, dass** die Auftragseinheit (6) und die Wandaufbaueinheit (17) sowie die Bestrahlungsvorrichtung (4) und eine Stromerzeugungseinheit (23) eine Baugruppe bilden.

12. Vorrichtung nach einem der vorhergehenden Ansprüche, **dadurch gekennzeichnet, dass** die Auftragseinheit (6) mindestens ein Auftragselement (8), insbesondere eine Streichklinge, und mindestens eine Dosiereinheit (7) aufweist, die geeignet ist, Baumaterial (3) auf das Trägerelement (9) oder mindestens eine zuvor aufgetragene Schicht aus Baumaterial (3) aufzubringen, wobei die Auftragseinheit (6) geeignet ist, das bereitgestellte Baumaterial (3) über das Auftragselement (8) zu verteilen.

13. Verfahren zum Betreiben mindestens einer Vorrichtung (1) nach einem der Ansprüche 1 bis 12 zur additiven Herstellung von dreidimensionalen Objekten (2) durch aufeinanderfolgende schichtweise selektive Bestrahlung und Verfestigung von Schichten eines mittels einer Energiequelle verfestigbaren Aufbaumaterials (3), wobei mindestens ein Wandelement (20, 21) über das erste und zweite Wandbildungselement (18, 19) mindestens ein Wandelement (20, 21) aufgebaut wird, das ein von dem Tragelement (9a) getragenes Baustoffvolumen (22) begrenzt.

## Revendications

1. Appareil pour la fabrication additive d'objets tridimensionnels (2) au moyen d'une irradiation sélective par couches successives et d'une consolidation des couches d'un matériau de construction (3) qui peut être consolidé au moyen d'une source d'énergie, dans lequel l'appareil (1) comprend une unité d'application (6) adaptée pour appliquer le matériau de construction (3) sur au moins un élément porteur (9) adapté pour porter le matériau de construction (3) appliqué sur l'élément porteur (9), dans lequel l'appareil comprend un dispositif d'irradiation (4) adapté pour irradier le matériau de construction (3) disposé sur l'élément porteur (9), **caractérisé en ce qu'**il est prévu une unité de construction de mur (17) il est prévu une unité de construction de paroi (17) qui est adaptée pour construire au moins un élément de paroi (20, 21) délimitant un volume de matériau de construction (22) porté par l'élément porteur (9a), dans laquelle un premier élément de construction de paroi (18) et un second élément de construction de paroi (19) sont prévus, dans lequel le premier élément de construction de paroi (18) et le second élément de construction de paroi (19) sont au moins partiellement disposés à côté d'un volume de matériau de construction (22) porté par l'élément porteur (9), dans lequel l'unité d'application (6) et l'unité de construction de paroi (17) et le dispositif d'irradiation (4) forment un ensemble en forme de portique qui est mobile par rapport à l'élément porteur (9).

2. Appareil selon la revendication 1, **caractérisé en ce que** l'unité d'application (6) est adaptée pour appliquer au moins une couche de matériau de construction en forme d'arc.

3. Appareil selon la revendication 1 ou 2, **caractérisé en ce que** l'élément porteur (9) est au moins partiellement en forme de disque et s'étend entre un premier rayon (10) et un deuxième rayon (11).

4. Appareil selon l'une des revendications précédentes, **caractérisé par** un dispositif d'entraînement (13) adapté pour générer un mouvement relatif entre l'unité d'application (6) et l'élément porteur (9).

5. Appareil selon l'une des revendications précédentes, **caractérisé en ce que** le dispositif d'entraînement (13) est adapté pour générer un mouvement de rotation entre l'unité d'application (6) et l'élément porteur (9) et/ou un mouvement de translation, notamment dans la direction z, entre l'unité d'application (6) et l'élément porteur (9).

6. Appareil selon l'une des revendications précédentes, **caractérisé en ce que** le dispositif d'entraînement (13) est adapté pour générer le mouvement de translation et/ou le mouvement de rotation de l'unité d'application (6) et/ou de l'élément porteur (9) de manière continue ou par paliers.

7. Appareil selon l'une des revendications précédentes, **caractérisé en ce que** le premier élément de construction de paroi (18) est adapté pour construire un premier élément de paroi (20) sur le premier rayon (10) de l'élément porteur (9) et le second élément de construction de paroi (19) est adapté pour construire un second élément de paroi (21) sur le second rayon (11) de l'élément porteur (9).

8. Appareil selon l'une des revendications précédentes, **caractérisé en ce que** l'unité de construction de paroi (17) est adaptée pour construire successivement par couches le au moins un élément de paroi (20, 21) à partir du matériau de construction (3) appliqué sur l'élément porteur (9).

9. Appareil selon l'une des revendications précédentes, **caractérisé en ce que** l'unité de construction de paroi (17) est adaptée pour construire l'au moins un élément de paroi (20, 21) via un dépôt d'énergie, en particulier via un faisceau d'énergie et/ou un élément chauffant, et/ou un dépôt d'au moins un matériau liant.

10. Appareil selon l'une des revendications précédentes, **caractérisé en ce que** le dispositif d'irradiation (4) est adapté pour irradier le matériau de construction (3) entre le premier élément de paroi (20) et le deuxième élément de paroi (21).

11. Appareil selon l'une des revendications précédentes, **caractérisé en ce que** l'unité d'application (6) et l'unité de construction de paroi (17) et le dispositif d'irradiation (4) et une unité de génération de flux (23) forment un ensemble.

12. Appareil selon l'une des revendications précédentes, **caractérisé en ce que** l'unité d'application (6) comprend au moins un élément d'application (8), en particulier une lame d'enduction, et au moins une unité de dosage (7) adaptée pour fournir un matériau de construction (3) sur l'élément porteur (9) ou au moins une couche de matériau de construction (3) précédemment appliquée, dans lequel l'unité d'application (6) est adaptée pour distribuer le matériau de construction (3) fourni via l'élément d'application (8).

13. Procédé d'exploitation d'au moins un dispositif (1) selon l'une des revendications 1 à 12 pour la fabrication additive d'objets tridimensionnels (2) par irradiation sélective par couches successives et consolidation de couches d'un matériau de construction (3) pouvant être consolidé au moyen d'une source d'énergie, dans lequel au moins un élément de paroi (20, 21) est construit par l'intermédiaire des premier et deuxième éléments de construction de paroi (18, 19), lequel élément de paroi (20, 21) délimite un volume de matériau de construction (22) porté par l'élément porteur (9a).
